# EUROPÄISCHE PATENTSCHRIFT

(11) **EP 0 272 435 B1**
(45) Veröffentlichungstag und Bekanntmachung des Hinweises auf die Patenterteilung: **27.01.1993**
(21) Anmeldenummer: 87116688.0
(22) Anmeldetag: 12.11.1987
(51) Int. Cl.: H04M 1/02

(54) **Anordnung zur Verwendung eines Fernsprechtischapparates als Fernsprechwandapparat**
Arrangement for using a table telephone as a wall telephone
Dispositif permettant l'utilisation d'un poste de table comme poste mural

(30) Priorität: 20.12.1986 DE 3643829; 09.09.1987 DE 3730235
(43) Veröffentlichungstag der Anmeldung: 29.06.1988
(73) Patentinhaber: TELENORMA GMBH, 60326 Frankfurt am Main (DE)
(72) Erfinder: Klotzbach, Klaus, D-6000 Frankfurt/M 50 (DE); Girscher, Wolfgang, D-6000 Frankfurt/M (DE)

(56) Entgegenhaltungen:
- DE-A- 3 002 075
- DE-B- 2 940 203
- DE-C- 3 210 111
- GB-A- 2 157 915
- US-A- 3 859 476
- US-A- 4 617 428
- TECHNICAL DIGEST (AT & T TECHNOLOGIES), Nr. 77, Oktober 1985, Seite 1, Berkeley Heights, New Jersey, US; J.N. ABEL et al.: "A desk/wall convertible telephone"

## Beschreibung

Die Erfindung betrifft eine Anordnung zur Verwendung eines aus einer oberen Gehäuseschale und einer unteren Gehäuseschale bestehenden Fernsprechtischapparates als Fernsprechwandapparat, wobei der einen Handapparat aufweisende Fernsprechapparat pultförmig ausgebildet ist, die Oberseite in einem Winkel von größer 20 Grad und kleiner 45 Grad zur Auflagefläche des Fernsprechtischapparates geneigt und die Rückwand zur Oberseite im Winkel von 80 Grad bis 100 Grad angeordnet ist, und der Fernsprechapparat mit der Rückwand nach unten an einer Wand befestigt als Fernsprechapparat benutzbar ist.

Ein derartiger, pultförmiger ausgebildete Fernsprechapparat ist bereits vorgeschlagen worden, so wird in der nachveröffentlichten DE-A- 36 07 727 ein Fernsprechapparat beschrieben, dessen Oberseite in Richtung zum Benutzer relativ stark geneigt ist, um auf diese Weise bessere Bedienbarkeit und Ablesbarkeit der Tasten und der Anzeigevorrichtung zu ermöglichen. In der genannten Patentanmeldung ist auch Hinweis darauf enthalten, diesen als Fernsprechtischapparat um 180 Grad gedreht an der Wand befestigt auch als Fernsprechwandapparat zu benutzen. Weitergehende Hinweise lassen sich dieser Patentanmeldung nicht entnehmen.

Die Aufgabe der Erfindung besteht nun darin, eine Anordnung anzugeben, welche es ermöglicht, den vorgeschlagenen Fernsprechtischapparat auch als Fernsprechwandapparat zu benutzen.

Diese Aufgabe wird dadurch gelöst, daß ein an der Wand befestigbarer Wandhalter vorgesehen ist, welcher hakenartige Vorsprünge aufweist, die in entsprechende Öffnungen der Unterseite des Fernsprechapparates eingreifen und daß die untere Gehäuseschale Öffnungen aufweist, in welche federnde Stege der oberen Gehäuseschale von unten einrasten und daß die hakenartige Vorsprünge in diese Öffnungen von unten einrasten.

Der erfindungsgemäße Wandhalter wird zunächst an der Wand befestigt und anschließend der Fernsprechapparat in diesen eingehängt, wobei er durch die hakenartigen Vorsprünge gehalten wird.

Ein an der Wand befestigbare Wandhalter, welcher hakenartige Vorsprünge aufweist, die in entsprechende Öffnungen der Unterseite des Fernsprechapparates eingreifen, ist bereits bekannt. So wird in der US-A- 3 859 476 und in der GB-A- 2 157 915 eine Fernsprechapparategrundplatte beschrieben, welche in die untere Gehäuseschale eines Fernsprechapparates in der einen oder in der anderen um 180 Grad gedrehten Position einrastbar ist, wobei in der einen Position der Fernsprechapparat als Tischapparat und in der anderen Position, in welcher die Grundplatte an der Wand befestigt ist, als Wandapparat verwendbar ist. Dabei ist die Grundplatte auf der einen Seite mit zwei festen Nasen und auf der gegenüberliegenden Seite mit einer bzw. zwei federnden Nasen versehen, wobei die Nasen in entsprechende, hierfür vorgesehene Öffnungen einrastbar sind.

Bei der erfindungsgemäßen Anordnung ist die untere Gehäuseschale mit entsprechenden Öffnungen versehen, in welche die federnden Stege der oberen Gehäuseschale hineinragen und einrasten. Durch diese Öffnungen ist es möglich, von unten mittels eines Schraubenziehers die federnden Stege aus der rastenden Stellung herauszudrücken, um die Gehäuseschalen voneinander zu lösen. In diese vorhandene Öffnung rastet jeweils ein hakenartiger Vorsprung des an der Wand befestigten Wandhalters ein.

Die Erfindung wird anhand von Ausführungsbeispielen näher erläutert, welche in der Zeichnung dargestellt sind.

Es zeigt:
- Fig. 1: die Seitenansicht eines an der Wand befestigten Wandhalters mit dem daran angebrachten Fernsprechapparat,
- Fig. 2: eine Dreiseitenansicht des Wandhalters,
- Fig. 3: Einzelheiten zur Befestigung der Gehäuseschalen untereinander und der zusätzlichen Befestigung mit dem Wandhalter und
- Fig. 4: eine Draufsicht auf den Wandhalter mit dem angehängten Handapparat und
- Fig. 5: eine Dreiseitenansicht des Wandhalters.

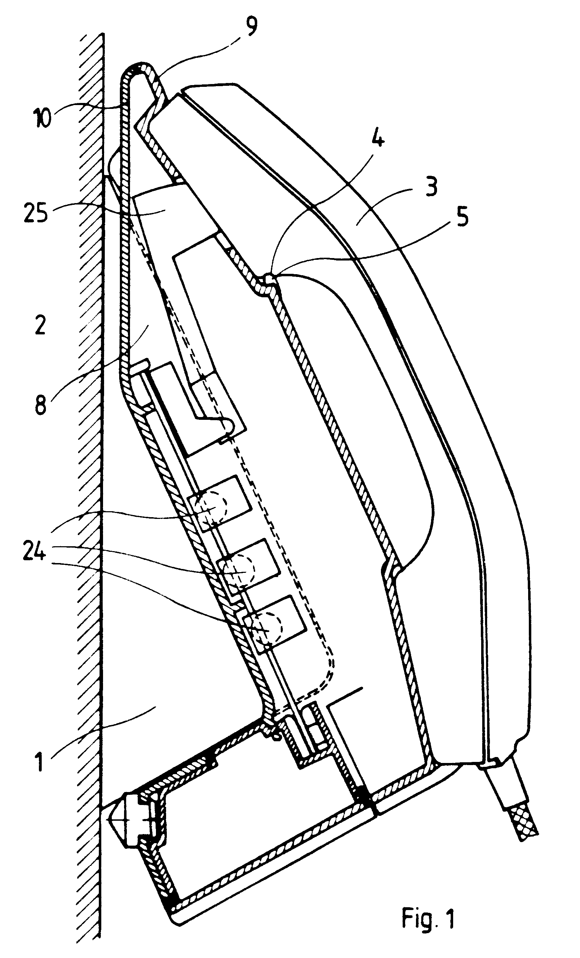

Der in Fig. 1 gezeigte Fernsprechapaprat ist um 180° gedreht an einer senkrechten Wand 2 befestigt. Der Fernsprechapparat besteht aus einer oberen 9 und einer unteren 10 Gehäuseschale. An der Wand 2 wird zunächst der Wandhalter 1 angeschraubt und mit diesem anschließend der Fernsprechapparat mechanisch verbunden. Dies kann auf verschiedene Weise geschehen, wie dies weiter unten noch ausführlich beschrieben wird. Der Fernsprechapparat weist an seiner Unterseite (als Tischapparat) eine Wanne 8 auf, welche nicht bis zu den Seiten des Apparategehäuses reicht. An dieser Wanne 8 sind seitlich Kabeleinführungen 24 zum Anschluß des Handapparats 3, eines Zweithöreres, usw. vorgesehen. Bei der Verwendung eines Fernsprechtischapparates als Fernsprechwandapparat muß auch die Wählvorrichtung desselben ebenfalls um 180° gedreht werden. Zum Halten des Handapparates 3 auf dem Fernsprechwandapparat ist am Apparategehäuse ein Haken 5 angebracht, welcher in einen Schlitz 4 des Handapparats im aufgelegten Zustand hineinragt. In diesem Zustand wird auch der drehbar gelagerte Gabelumschalter 25 betätigt. Eine Möglichkeit der Ausbildung des Hakens 5 zum Halten des Handapparats 3 durch Eingreifen in den Schlitz 4 wird auch in der Patentschrift DE-C- 3 210 111 beschrieben.

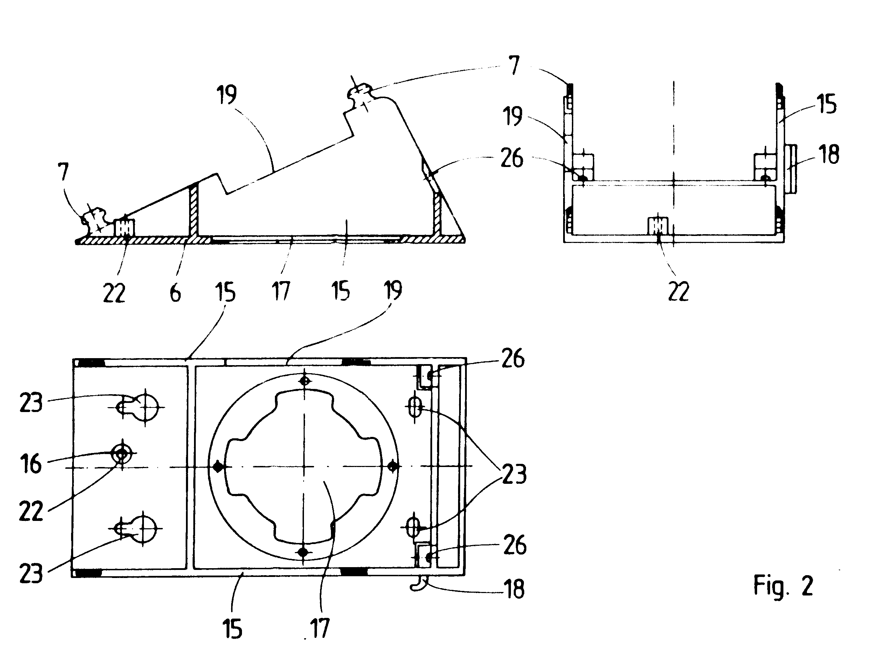

Der in Fig. 2 gezeigte Wandhalter 1 besteht aus einer Grundplatte 6 und den beiden dreieckförmigen Seitenteilen 15, welche sich an die Unterseite des Fernsprechapparategehäuses anschmiegen und jeweils zwei hakenförmige Vorsprünge 7 aufweisen. Das Fernsprechapparategehäuse läßt sich zusätzlich mit einer Schraube am Wandhalter befestigen, die in die Bohrung 16 des zylinderförmigen Vorsprungs 22 hineingeschraubt wird. Zum Vorbeiführen der zu den Kabeldurchführungen 24 (Fig. 1) führenden Kabel ist eine Kabelöffnung 19 an dem entsprechenden Seitenteil 15 angebracht. An einem der beiden Seitenteile oder auch an beiden Seitenteilen 15 kann ein Haken 18 vorgesehen sein, der zum Aufhängen des Handapparates dient, wobei der Haken 18 in den Schlitz 4 des Handapparats 3 (Fig. 1) eingreift.

Die Grundplatte 6 ist mit einer Installationsöffnung 17 versehen, deren Abmessungen den genormten Steckdosen und Lichtschaltern entspricht, so daß der Wandhalter wie eine Steckdose oder ein Lichtschalter an einer unterputz angebrachten Installationsdose befestigt werden kann, wobei über diese Dose auch der elektrische Anschluß des Fernsprechapparats erfolgt. Wird diese Art der Befestigung nicht benutzt, so sind weitere Befestigungslöcher 23 in der Grundplatte 6 vorhanden. An dem Wandhalter sind auch Bohrungen 26 angebracht, welche eine andersartige Befestigung des Apparategehäuses mit dem Wandhalter mittels Schraubverbindungen ermöglichen.

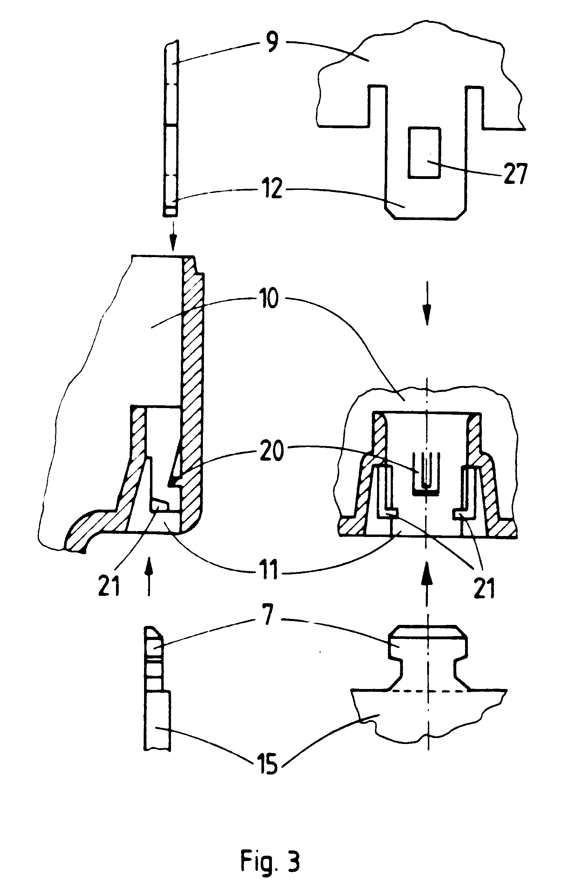

Die obere Gehäuseschale 9 weist Stege 12 auf, welche durch Öffnungen 11 der unteren Gehäuseschale 10 hindurchragen und mit Rastöffnungen 27 in die Rastnasen 20 einrasten. Die Verbindung der beiden Gehäuseschalen kann durch Einführen eines Schraubenziehers unten in die Öffnung 11 zum Abheben des federnden Stegs 12 gelöst werden. Zusätzlich rastet der hakenförmige Vorsprung 7 des Seitenteils 15 des Wandhalters in die Öffnung 11 und zwar in dort angebrachten Nasen 21 ein (Fig.3).

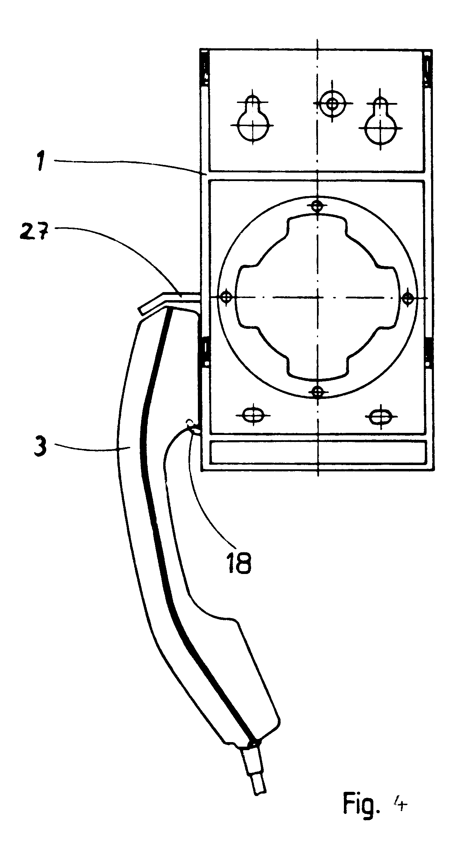

Der Handapparat 3 weist an seiner Unterseite und zwar unterhalb der Schallaustrittsöffnungen der Hörkapsel einen Schlitz 4 auf, in welchen der am Wandhalter angebrachte Haken 18 einrastet und so den Handapparat 3 im abgehobenen Zustand hält. Weiterhin ist am Wandhalter 1 eine Haltebügel 27 angebracht, welcher den Handapparat an dem der Einführung der Handapparateschnur abgewandten Ende umgreift (Fig.4).

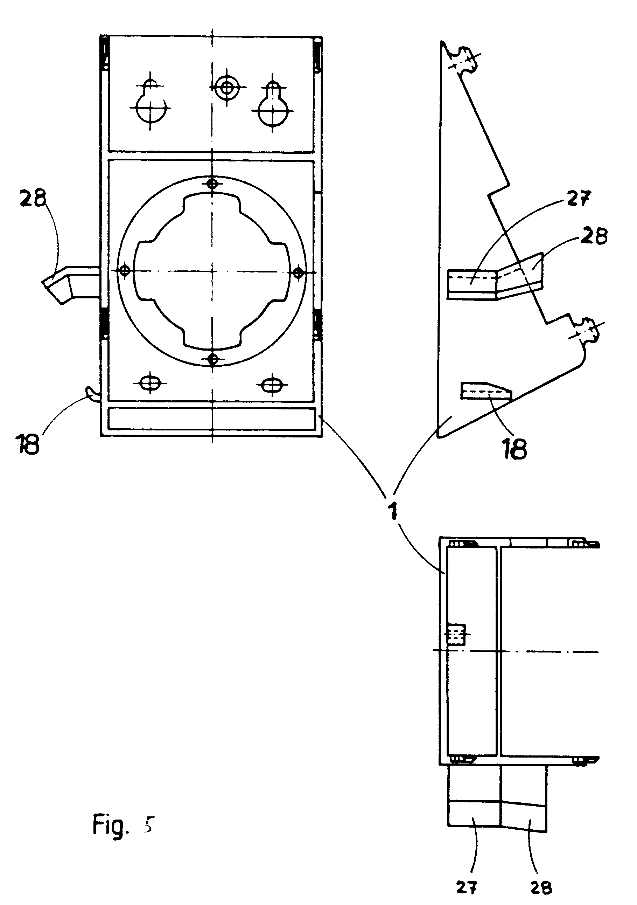

Der am Wandhalter 1 angebrachte Haltebügel 27 ist mit einer Führung 28 versehen, außerdem ist der Haken auf der der Wand abgewandten Seite angeschrägt, so daß sich der Handapparat leicht einhängen läßt und er vom Haken 18 gehalten wird. Der Haltebügel 27 mit der Führung 28 und/oder der Haken 18 können entweder fest mit dem Wandhalter 1 verbunden oder federnd gelagert sein (Fig.5).

## Patentansprüche

1. Anordnung zur Verwendung eines, aus einer oberen Gehäuseschale (9) und einer unteren Gehäuseschale (10) bestehenden Tischapparates als Fernsprechwandapparat, wobei der einen Handapparat (3) aufweisende Fernsprechapparat pultförmig ausgebildet ist, die Oberseite in einem Winkel von größer 20 Grad und kleiner 45 Grad zur Auflagefläche des Fernsprechapparates geneigt und die Rückwand zur Oberseite im Winkel von 80 Grad bis 100 Grad angeordnet ist, und der Fernsprechapparat mit der Rückwand nach unten an einer Wand befestigt als Fernsprechwandapparat benutzbar ist,
**dadurch gekennzeichnet,**
daß ein an der Wand befestigbarer Wandhalter (1) vorgesehen ist, welcher hakenartige Vorsprünge (7) aufweist, die in entsprechende Öffnungen (11) der Unterseite des Fernsprechapparates eingreifen und daß die untere Gehäuseschale (10) Öffnungen (11) aufweist, in welche federnde Stege (12) der oberen Gehäuseschale (9) von oben einrasten und daß die hakenartige Vorsprünge (7) in diese Öffnungen (11) von unten einrasten.

2. Anordnung nach Anspruch 1 für einen Fernsprechapparat mit einer zur Oberseite und zur Rückwand parallel verlaufenden Unterseite,
**dadurch gekennzeichnet,**
daß der Wandhalter (1) zwei an die Unterseite reichende Seitenteile (15) aufweist, welche mit den beiden Seiten des Apparategehäuses abschließen und daß die hakenförmige Vorsprünge (7) an den Seitenteilen (15) angebracht sind.

3. Anordnung nach einem der Ansprüche 1 oder 2,
**dadurch gekennzeichnet,**
daß der Wandhalter (1) eine Grundplatte (6) aufweist.

4. Anordnung nach Anspruch 3,
**dadurch gekennzeichnet,**
daß die Grundplatte (6) eine Bohrung (16) aufweist, an welcher der Fernsprechapparat mit einer Schraube befestigbar ist und daß die Grundplatte (6) eine Installationsöffnung 17 aufweist, welche zur Durchführung der Anschlußleitung und/oder Befestigung des Wandhalters (1) an der Wand dient.

5. Anordnung nach einem der Ansprüche 1 bis 4,
**dadurch gekennzeichnet,**
daß der Wandhalter (1) einen Haken (18) zum Anhängen des Handapparates (3) aufweist.

6. Anordnung nach Anspruch 5,
**dadurch gekennzeichnet,**
daß der Haken (18) an einem Seitenteil (15) des Wandhalters (1) angebracht ist.

7. Anordnung nach einem der Ansprüche 5 oder 6,
**dadurch gekennzeichnet,**
daß oberhalb des Hakens (18) ein das der Einführung der Handapparateschnur abgewandte Ende des Handapparates (3) umgreifende Haltebügel (27) angebracht ist.

8. Anordnung nach einem der Ansprüche 5 bis 7,
**dadurch gekennzeichnet,**
daß die der Wand abgewandten Seite des Haltebügels (27) eine Führung (28) aufweist.

9. Anordnung nach einem der Ansprüche 5 bis 8,
**dadurch gekennzeichnet,**
daß der Haken (18) auf der der Wand abgewandten Seite angeschrägt ist.

10. Anordnung nach einem der Ansprüche 5 bis 9,
**dadurch gekennzeichnet,**
daß der Haken (18) und/oder Haltebügel (27) federnd gelagert sind.

## Claims

1. Arrangement for the use of a table telephone, which consists of an upper housing shell (9) and a lower housing shell (10), as a wall telephone, wherein the telephone, which includes a handset (3), is constructed desk-shaped, the upper side is inclined at an angle greater than 20 degrees and smaller than 45 degrees relative to the deposit surface of the telephone, the back wall is arranged at the angle of 80 degrees to 100 degrees relative to the upper side and the telephone is usable as a wall telephone with the back wall fastened downwardly at a wall, characterised thereby that a wall holder (1) is provided, which is fastenable to a wall and has hook-shaped projections (7) which engage in corresponding openings (11) of the underside of the telephone, that the lower housing shell (10) has openings, in which resilient webs (12) of the upper housing shell (9) detent from above, and that the hook-shaped projections (7) detent in these openings (11) from below.

2. Arrangement according to claim 1 for a telephone with an underside extending parallel to the upper side and to the back wall, characterised thereby that the wall holder (1) has two side members (15), which extend at the underside and which close off with the two sides of the telephone housing, and that the hook-shaped projections (7) are situated at the side members (15).

3. Arrangement according to one of the claims 1 and 2, characterised thereby that the wall holder (1) has a base plate (6).

4. Arrangement according to claim 3, characterised thereby that the base plate (6) has a bore (16), at which the telephone is fastenable by a screw, and that the base plate (6) has an installation opening (17), which serves for the leading through of the connection lead and/or for the fastening of the wall holder (1) to the wall.

5. Arrangement according to one of the claims 1 to 4, characterised thereby that the wall holder (1) has a hook (18) for the suspension of the handset (3).

6. Arrangement according to claim 5, characterised thereby that the hook (18) is situated at a side member (15) of the wall holder (1).

7. Arrangement according to one of the claims 5 and 6, characterised thereby that a holding bracket (27), which engages around the end of the handset (3) remote from the entry of the handset flex, is mounted above the hook (18).

8. Arrangement according to one of the claims 5 to 7, characterised thereby that the side of the holding bracket (27) remote from the wall has a guide (28).

9. Arrangement according to one of the claims 5 to 8, characterised thereby that the hook (18) is chamfered at the side remote from the wall.

10. Arrangement according to one of the claims 5 to 9, characterised thereby that the hook (18) and/or the holding bracket (27) is resiliently mounted.

## Revendications

1. Dispositif permettant d'utiliser un poste de table, comprenant un boîtier composé d'une coquille supérieure (9) et d'une coquille inférieure (10) comme poste téléphonique mural, le poste téléphonique, possédant un combiné (3), ayant la forme d'un pupitre dont le côté supérieur est incliné sous un angle supérieur à 20 degrés et inférieur à 45 degrés par rapport à la surface de pose du poste, la paroi arrière faisant un angle de 80 degrés à 100 degrés avec de dessus, le poste téléphonique étant utilisable comme poste téléphonique mural, auquel cas il est fixé à une paroi avec sa paroi arrière dirigée vers le bas,
caractérisé en ce
qu'il comprend un support mural (1) pouvant être fixé à la paroi et présentant des saillies (7) semblables à des crochets qui s'engagent dans des ouvertures (11) correspondantes du dessous du poste téléphonique, que la coquille inférieure (10) du boîtier présente des ouvertures (11) dans lesquelles des pattes élastiques (12) de la coquille supérieure (9) du boîtier s'encliquettent d'en haut et que les saillies (7) semblables à des crochets s'encliquettent d'en bas dans ces ouvertures (11).

2. Dispositif selon la revendication 1 pour un poste téléphonique dont le dessous s'étend parallèlement au dessus et à la paroi arrière,
caractérisé en ce
que le support mural (1) possède deux parties latérales (15) s'étendant jusqu'au dessous du poste et affleurant les deux côtés du boîtier du poste et que les saillies (7) en forme de crochets sont disposées sur les parties latérales (15).

3. Dispositif selon la revendication 1 ou 2, caractérisé en ce
que le support mural (1) possède une plaque-semelle (6).

4. Dispositif selon la revendication 3, caractérisé en ce
que la plaque-semelle (6) présente un perçage (16) auquel le poste téléphonique peut être fixé par une vis et que la plaque-semelle (6) présente une ouverture d'installation (17) servant au passage de la ligne de raccordement et/ou à la fixation du support mural (1) à la paroi.

5. Dispositif selon une des revendications 1 à 4, caractérisé en ce
que le support mural (1) possède un crochet (18) pour suspendre le combiné (3).

6. Dispositif selon la revendication 5, caractérisé en ce
que le crochet (18) est disposé sur une partie latérale (15) du support mural (1).

7. Dispositif selon la revendication 5 ou 6, caractérisé en ce
qu'un étrier de maintien (27) est diposé au-dessus du crochet (18), de manière à entourer l'extrémité du combiné (3) éloignée de l'entrée du cordon du combiné.

8. Dispositif selon une des revendications 5 à 7, caractérisé en ce
que le côté de l'étrier (27) éloigné de la paroi présente un guidage (28).

9. Dispositif selon une des revendications 5 à 8, caractérisé en ce
que le crochet (18) est biseauté du côté éloigné de la paroi.

10. Dispositif selon une des revendications 5 à 9, caractérisé en ce
que le crochet (18) et/ou l'étrier de maintien (27) sont montés élastiquement.
